# EUROPEAN PATENT APPLICATION

(11) **EP 2 259 108 A2**
(43) Date of publication of application: **08.12.2010**
(21) Application number: 10164738.6
(22) Date of filing: 02.06.2010
(51) Int. Cl.: G02B 6/138, G02B 6/13, B29D 11/00

(54) **Method for manufacturing optical waveguide**

(30) Priority: 05.06.2009 JP 2009136227
(71) Applicant: Nitto Denko Corporation, Ibaraki-shi Osaka 567-8680 (JP)
(72) Inventor: Naitou, Ryusuke, Osaka 567-8680 (JP)
(74) Representative: HOFFMANN EITLE

(57) **Abstract**

A method for manufacturing an optical waveguide which comprise the steps of: filling an ultraviolet curable liquid-state resin (17) to form an over-cladding layer (14) in a concave portion (16) of a die (15); bringing an under-cladding layer (12) and a core (13) into close contact with the ultraviolet curable liquid-state resin (17) filled in the concave portion (16) of the die (15); and irradiating ultraviolet rays (24) from a substrate (11) side after bringing the under-cladding layer (12) into close contact with the die (15) by the application of a pressure (23) onto the substrate (11) and the die (15) to cure the ultraviolet curable liquid-state resin (17) and then removing the die (15).

## Description

### TECHNICAL FIELD OF THE INVENTION

### Field of the Invention

The present invention relates to a method for manufacturing an optical waveguide with a high optical transmission efficiency.

### BACKGROUND ART

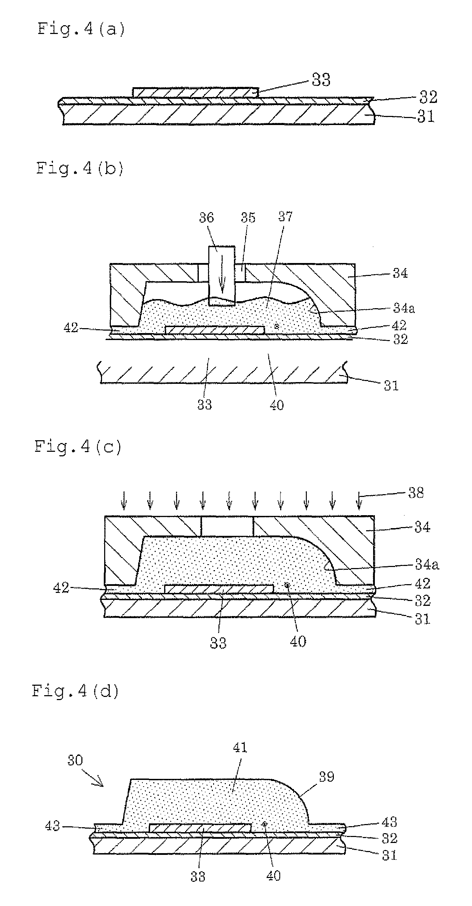

Optical waveguides in which a tip of an over-cladding layer is formed in a lens shape are known (Japanese Unexamined Patent Publication No. 2008-281654 A). Referring to FIGs. 4 (a) to 4 (d), there is shown such a conventional method for manufacturing an optical waveguide. FIGs. 4 (a) to 4 (d) are cross-sectional views for each process of an optical waveguide 30 of a conventional manufacturing method.

First, as shown in FIG. 4 (a), an under-cladding layer 32 is formed in a predetermined area on a surface of a substrate 31. And then a core 33 is formed on a surface of the under-cladding layer 32. The shape of the under-cladding layer 32 is substantially a flat plate to uniformly cover the entire substrate 31. The core 33 is patterned in a thin line of a straight line or a curve line. The core 33 is served as a light path.

Secondly, as shown in FIG. 4 (b), the core 33 and the under-cladding layer 32 are covered with a molding die 34. A dispenser needle 36 is inserted in a through hole 35 to inject an ultraviolet curable liquid-state resin 37 into the molding die 34 through the dispenser needle 36. The molding die 34 is made of quartz so as to be transmitted by ultraviolet rays 38. An inner surface 34a of the molding die 34 is served as a negative type of a desired lens 39. A double circle 40 respectively shown in FIGs. 4 (b) to 4 (d) indicates the center of the lens 39.

Third, as shown in FIG. 4 (c), the ultraviolet curable liquid-state resin 37 is cured by the irradiation with the ultraviolet rays 38 through the molding die 34.

Finally, when the molding die 34 is removed, as shown in FIG. 4 (d), a desired shaped-over-cladding layer 41 is obtained to complete the optical waveguide 30. A tip of the over-cladding layer 41 which is located along the inner surface of the molding die 34 is served as a desired lens 39.

However, it is not possible to press the molding die 34 onto the under-cladding layer 32 by the application of a high pressure in a process of FIG. 4 (b) because the quartz-made molding die 34 has a weak mechanical strength. This makes it easier to create a clearance 42 between the molding die 34 and the under-cladding layer 32. The ultraviolet curable liquid-state resin 37 penetrates into the clearance 42 between the molding die 34 and the under-cladding layer 32 when injecting the ultraviolet curable liquid-state resin 37 into the molding die 34.

The ultraviolet curable liquid-state resin 37 having penetrated into the clearance 42 is cured by the irradiation of the ultraviolet rays 38 shown in FIG. 4 (c) to form a burr 43 around the over-cladding layer 41. Further, the thickness of the over-cladding layer 41 becomes greater than a set value, even if the burr 43 is not formed.

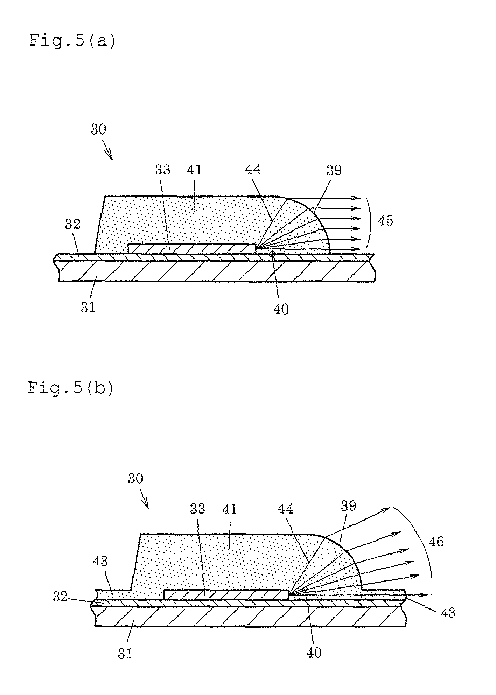

Referring to FIGs. 5 (a) and 5 (b), there is illustrated defects that occur in this case.

FIG. 5 (a) is a cross-sectional view of the finished optical waveguide 30 in the case where there is no clearance 42 between the molding die 34 and the under-cladding layer 32. A center 40 of the lens 39 that is a tip of the over-cladding layer 41 is located at a design position. Light 44 emitted from the core 33 is refracted at the lens 39 to become desired parallel beams 45 when emitted from the lens 39.

FIG. 5 (b) is a cross-sectional view of the finished optical waveguide 30 in the case where there is a clearance 42 between the molding die 34 and the under-cladding layer 32. The center 40 of the lens 39 that is a tip of the over-cladding layer 41 is out of alignment upward from the design position, as well as the formation of the burr 43 around the over-cladding layer 41. Accordingly, when the light 44 emitted from the core 33 emits from the lens 39, the light 44 does not become desired parallel beams but becomes diffusion light 46. This lowers the optical transmission efficiency of the optical waveguide 30.

### SUMMARY OF THE INVENTION

In conventional methods for manufacturing optical waveguides, it is impossible to press the molding die 34 onto the under-cladding layer 32 with a high pressure because the quartz-made molding die 34 has a weak mechanical strength. This makes it easy to create the clearance 42 between the molding die 34 and the under-cladding layer 32.

When there is the clearance 42 between the molding die 34 and the under-cladding layer 32, the ultraviolet curable liquid-state resin 37 penetrates into the clearance 42 to form the burr 43 around the over-cladding layer 41. The over-cladding layer 41 has a thickness greater than the designed value, even if the burr 43 is not formed.

Thus, the center 40 in the lens 39 that is located at the tip of the over-cladding layer 41 is out of alignment from the design position. Accordingly, the light 44 emitted from the core 33 does not become the desired parallel beams 45 but becomes the diffusion light 46 when emitted from the lens 39. This lowers the optical transmission efficiency of the optical waveguide 30.

According to the present invention, there is provided a method for manufacturing an optical waveguide according to the present invention which comprises: a substrate for transmitting ultraviolet rays; an under-cladding layer formed on the substrate; a core formed on the under-cladding layer; and an over-cladding layer formed on the under-cladding layer so as to cover the core. The method for manufacturing an optical waveguide according to the present invention includes the following steps A) to c): A) filling an ultraviolet curable liquid-state resin that may form an over-cladding layer in a concave portion of a die with a concave portion; B) bringing the core and the under-cladding layer into close contact with the ultraviolet curable liquid-state resin filled in the concave portion of the die; and C) irradiating ultraviolet rays from the substrate side to cure the ultraviolet curable liquid-state resin while bringing the under-cladding layer into close contact with the die by applying a pressure onto the substrate and the die, alternatively, after bringing the under-cladding layer into close contact with the die by applying a pressure onto the substrate and the die and then removing the die.

In a preferred embodiment of the manufacturing method according to the present invention, the substrate is a cycloolefin-resin film or an ester resin film.

In another preferred embodiment of the manufacturing method according to the present invention, a material for the die is a metal.

In still another preferred embodiment of the manufacturing method according to the present invention, the material for the die is any one of an aluminum, an aluminum alloy, a nickel, a nickel alloy, an iron, and a ferrous alloy.

In a further preferred embodiment of the manufacturing method according to the present invention, an end surface of the over-cladding layer is a long lens having a cross-sectional shape of a quarter of a circle.

In a still further preferred embodiment of the manufacturing method according to the present invention, the pressure is 0.01 to 10 MPa.

In another preferred embodiment of the manufacturing method according to the present invention, a clearance between the under-cladding layer and the die is less than 5 µm when bringing the under-cladding layer into close contact with the die.

In still another preferred embodiment of the manufacturing method in step B according to the present invention, a laminate including a core, an under-cladding layer, and a substrate is absorbed in a holder with at least two absorption means to release absorption of one absorption means and the core and the under-cladding layer are partially in contact with the ultraviolet curable liquid-state resin while bowing the laminate and subsequently, the other absorption means is released to bring the core and the under-cladding layer completely into contact with the ultraviolet curable liquid-state resin.

### EFFECTS OF THE INVENTION

The optical waveguide obtained by the manufacturing method of the present invention is as per designed in dimensions and shape of the over-cladding layer. For instance, the dimensions of the long lens of the tip of the over-cladding layer are as per designed and the shape of the lens is formed as per designed. Accordingly, light emitted from an end of the core becomes parallel beams by the long lens when emitted from outside the optical waveguide. Thus, the optical waveguide obtained by the manufacturing method of the present invention has a high optical transmission efficiency.

### BRIEF DESCRIPTION OF THE DRAWINGS

For a full understanding of the present invention, reference should be made to the following detailed description of the preferred embodiments of the invention as illustrated in the accompanying drawings.

FIG. 1 (a) illustrates a step A of a method for manufacturing an optical waveguide of the present invention;
FIG. 1 (b) illustrates a step B of the manufacturing method of the present invention;
FIGs. 1 (c) and 1 (d) respectively illustrate a step C of the manufacturing method of the present invention;
FIG. 1 (e) is a schematic view of an optical waveguide obtained by the manufacturing method of the present invention;
FIGs. 2 (a) to 2 (c) respectively illustrate steps in order of placing a laminate composed of a core/an under-cladding layer/a substrate in contact with an ultraviolet curable liquid-state resin filled in a concave portion in a die of the present invention;
FIG. 3 is a schematic view of an optical waveguide obtained by the manufacturing method of the present invention;
FIGs. 4 (a) to 4 (c) sequentially illustrate steps of a conventional method for manufacturing an optical waveguide;
FIG. 5 (a) is a cross-sectional view of a finished optical waveguide in the case where there is no clearance between a molding die and an under-cladding layer; and
FIG. 5 (b) is a cross-sectional view of a finished optical waveguide in the case where there is a clearance between the molding die and the under-cladding layer.

### DETAILED DESCRIPTION

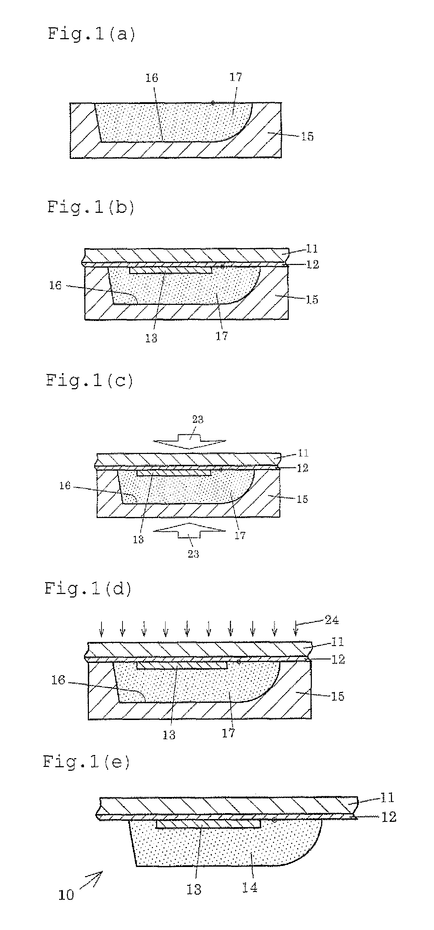

The preferred embodiments of the present invention will now be described with reference to FIGs. 1 to 5 of the drawings. Identical elements in the various figures are designated with the same reference numerals.

### [Manufacturing Method of the present invention]

As shown in FIGs. 1 (a) to 1 (e), according to the present invention, there is provided a method for manufacturing an optical waveguide 10 including a substrate 11 for transmitting ultraviolet rays, an under-cladding layer 12 formed on the substrate 11, a core 13 formed on the under-cladding layer 12, and an over-cladding layer 14 formed on the under-cladding layer 12 so as to cover the core 13.

The manufacturing method of the present invention includes the following steps A to C in order. The steps A to C may include another steps.

### [Step A]

In step A, as shown in FIG. 1 (a), an ultraviolet curable liquid-state resin 17 that may form the over-cladding layer 14 is filled in a concave portion 16 of a die 15 with a concave portion.

The die 15 is used for molding the over-cladding layer 14 in any shape (typically, a lens shape). The shape and size of the concave portion 16 in the die 15 are appropriately determined according to the shape of the over-cladding layer 14.

The die 15 to be used in the manufacturing method of the present invention needs a mechanical strength. For this reason, a metal, such as aluminum (alloy), nickel (alloy), iron (alloy) or the like is typically preferred.

The aforementioned ultraviolet curable liquid-state resin 17 is cured by the irradiation of ultraviolet rays, although the resin 17 flows in room temperature and is transformed into a stable state of being dissolved slightly and poorly soluble. The ultraviolet curable liquid-state resin 17 generally includes a photo polymerization prepolymer polymerized by photochemical functions and a reactive diluent, a photopolymerization initiator, a solvent, and a leveling agent or the like.

### [Step B]

As shown in FIG. 1 (b), the step B is bringing the under-cladding layer 12 and the core 13 formed on the under-cladding layer 12 into contact with the ultraviolet curable liquid-state resin 17 filled in the concave portion 16 of the die 15.

The substrate 11 transmits ultraviolet rays. The substrate 11 preferably has an ultraviolet transmission efficiency of at least 65%, more preferably at least 70% at a wavelength of 365 nm. The substrate 11 preferably has a thickness of 10 to 200 µm.

A material for forming the substrate 11 is preferably a resin film with flexibility. Examples of a resin film to transmit ultraviolet rays include a cycloolefin-resin film or an ester resin film.

The under-cladding layer 12 is formed from a material having a lower reflective index than the core 13. The under-cladding layer 12 and the over-cladding layer 14 are preferably made of an identical material. The under-cladding layer preferably has a thickness of 5 to 50 µm.

The core 13 is formed from a material having a higher refractive index than the under-cladding layer 12 and the over-cladding layer 14 and high transparency at a wavelength of light that propagates. A material for forming the core 13 is preferably an ultraviolet curable resin having a higher refractive index than the under-cladding layer 12 and the over-cladding layer 14.

The maximum refractive index difference between the core 13 and the under-cladding layer 12 is preferably 0.02 to 0.2. The maximum refractive index difference between the core 13 and the over-cladding layer 14 is preferably 0.02 to 0.2. The core 13 typically has a width of 10 to 500 µm and typically has a height of 10 to 100 µm.

The core 13 is patterned in any shape according to its purpose. Examples of the method for patterning the core 13 include a dry etching method, a transfer method, an exposing/developing method, a photo-bleaching method or the like.

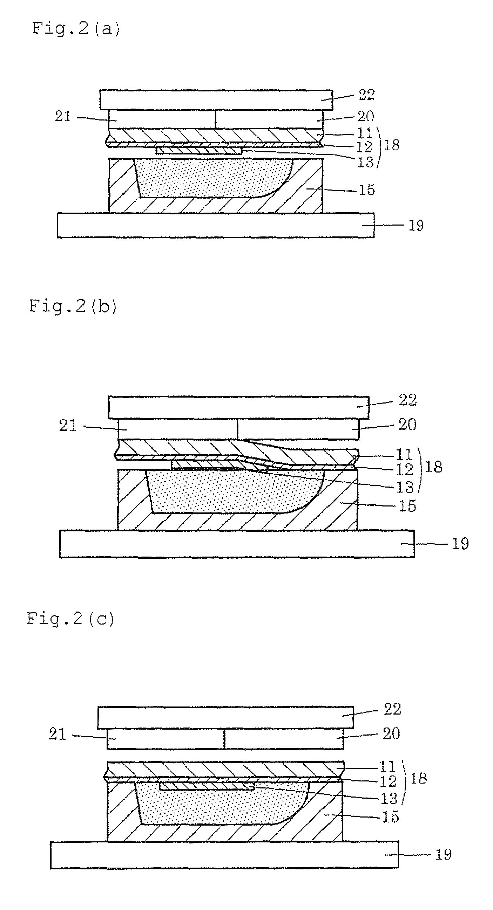

Although a method for bringing a laminate 18 including the core 13, the under cladding layer 12, and the substrate 11 into contact with the ultraviolet curable liquid-state resin 17 is not particularly limited, a typical example is a method shown in FIGs. 2 (a) to 2 (c).

First, as shown in FIG. 2 (a), a stage 19 is placed on the die 15 and the laminate 18 is absorbed into a holder 22 having at least two absorption means 20 and 21.

Secondly, as shown in FIG. 2 (b), absorption of one absorption means 20 is released to bring the core 13 and the under-cladding layer 12 partially into contact with the ultraviolet curable liquid-state resin 17 while bowing the laminate 18.

Finally, as shown in FIG. 2 (c), absorption of the other absorption means 21 is also released to bring the core 13 and the under-cladding layer 12 completely into contact with the ultraviolet curable liquid-state resin 17.

With use of such a method, it is possible to effectively remove bubbles easily adhered to the periphery of the core 13.

### [Step C]

As shown in FIGs. 1 (c) and 1 (d), the step C is a step of applying a pressure 23 for moving the substrate 11 and the die 15 close to each other to bring the under-cladding layer 12 into close contact with the die 15 and irradiating ultraviolet rays 24 onto the ultraviolet curable liquid-state resin 17 through the substrate 11 to cure the ultraviolet curable liquid-state resin 17.
The irradiation of ultraviolet rays 24 may be performed while bringing the under-cladding layer 12 into close contact with the die 15 by the application of the pressure 23. Alternatively, the irradiation of ultraviolet rays 24 may be performed by the application of the pressure 23 to bring the under-cladding layer 12 into close contact with the die and then decreasing the pressure 23.

When the die 15 is removed after the curing or the partial curing of the ultraviolet curable liquid-state resin 17, as shown in FIG. 1 (e), the optical waveguide 10 is completed.

The die 15 that withstands the high pressure 23 is used in the manufacturing method of the present invention. The die 15 is attached firmly to the under-cladding layer 12 by applying the high pressure 23 between the die 15 and the substrate 11 to cure the ultraviolet curable liquid-state resin 17. This makes it possible to prevent the burr around the over-cladding layer 14 and obtain the over-cladding layer 14 with a designed thickness.

The strength of the pressure 23 is preferably 0.01 to 10 MPa, more preferably 0.1 to 1 MPa. When the pressure 23 is less than 0.01 MPa, there is a possibility of the burr having a thickness of more than 30 µm. When the pressure 23 is over 10 MPa, there is a possibility of a pressure device being too big.

As long as the clearance between the under-cladding layer 12 and the die 15 is less than 5 µm when bringing the under-cladding layer 12 into close contact with the die 15, the dimensions and shape of the over-cladding layer 14 are substantially as designed. Light emitted from an end of the core 13 becomes parallel beams when the light is emitted from outside the optical waveguide 10.

The irradiation level of the ultraviolet rays 24 is preferably 100 to 8,000 mJ/cm² at a wavelength of 365 nm.

The die 15 is removed in a state in which the ultraviolet curable liquid-state resin 17 maintains the shape of the concave portion 16 in the die 15. The ultraviolet curable liquid-state resin 17 may be completely cured or may be partially cured when the die 15 is removed. Further curing treatment, such as irradiation of ultraviolet rays may be performed after removing the die 15 when the ultraviolet curable liquid-state resin is partially cured.

### [Optical Waveguide]

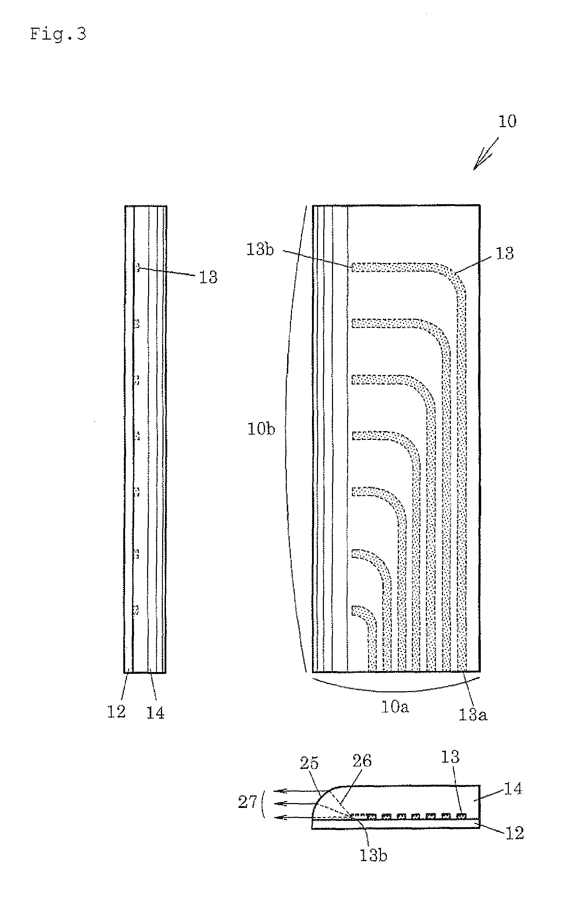

As shown in FIG. 3, the optical waveguide 10 according to the present invention comprises: the under-cladding layer 12; the core 13 located on the under-cladding layer 12; and the over-cladding layer 14 to cover the core 13. An end surface of the over-cladding layer 14 is served as a long lens 25 having a cross sectional shape of a quarter of a circle where the shape of the concave portion 16 in the die 15 is transferred.

The optical waveguide 10 is typically capable of receiving light at an end 13a of the core 13 arranged on a short side surface 10a and transmitting light to an end 13b of the core 13 near a long side surface 10b. The light 26 emitted from the end 13b of the core 13 becomes parallel beams by the long lens 25 when emitted outside from the optical waveguide 10. Accordingly, the optical waveguide 10 obtained from the manufacturing method of the present invention has a high optical transmission efficiency.

### EXAMPLES

### [Example 1]

### [Preparation for cladding-layer-forming varnish]

A varnish for forming cladding layer was prepared by mixing 100 parts by weight of a UV-curable epoxy-based resin having an alicyclic skeleton (EP 4080E manufactured by ADEKA CORPORATION) (Component A) and 2 parts by weight of a photo-acid-generation agent (CPI-200K manufactured by SAN-APRO Ltd.) (Component B).

### [Preparation of Varnish for Forming Cores]

A varnish for forming cores was prepared by mixing 40 parts by weight of a UV-curable epoxy-based resin having a fluorene skeleton (OGSOL EG manufactured by Osaka Gas Chemicals Co., Ltd.) (Component C), 30 parts by weight of a UV-curable epoxy-based resin having a fluorene skeleton (EX-1040 manufactured by Nagase ChemteX Corporation) (Component D), 30 parts by weight of 1,3,3-tris(4-(2-(3-oxetanyl))butoxyphenyl)butane (synthesized in accordance with Example 2 in JP 2007-070320 A) (Component E), 1 part by weight of the Component B, and 41 parts by weight of ethyl lactate.

### [Formation of Optical Waveguide]

The varnish for forming cladding layer was applied onto the surface of a polyethylene terephthalate film having an ultraviolet ray transmission efficiency of 70% at a wavelength of 365 nm. This was irradiated with 1,000 mJ/cm² of ultraviolet rays and thermally-treated at 80 °C for 5 minutes to form an under-cladding layer with a thickness of 20 µm. The under-cladding layer had a refractive index of 1.510 at a wavelength of 830 nm.

The core-forming varnish was applied onto the surface of the under-cladding layer, and this was subjected to a heating treatment at 100°C for 5 minutes so that a core layer was formed. The core layer was covered with a photomask and this was irradiated with 2,500 mJ/cm² of ultraviolet rays at a wavelength of 365 nm, and further subjected to a heating treatment at 100°C for 10 minutes. The gap between the core layer and the photomask was 100 µm

Unirradiated portions with ultraviolet rays of the core layer were dissolved and removed by a γ-butyrolactone aqueous solution, and this was subjected to a heating treatment at 120°C for 5 minutes so that a plurality of cores having a core width of 20 µm and a core height of 50 µm were formed. The plurality of cores respectively had a refractive index of 1.592 at a wavelength of 830 nm.

A laminate which comprises a core, an under-cladding layer, a polyethylene terephthalate film was obtained by the aforementioned steps.

The clad-forming varnish was filled in the concave portion of an aluminum die with a concave portion and placed on a stage.

The aforementioned polyethylene terephthalate film of the laminate was absorbed in a holder with two absorption means. Releasing one absorption means, the core and the under-cladding layer were attached firmly to the clad-forming varnish while bowing the laminate so as not to put air. Subsequently, the other absorption means was released and the core and the under-cladding layer were attached firmly to the clad-forming varnish.

Next, a pressure (0.1 MPa) was applied between the die and the polyethylene terephthalate film to reduce the size of a clearance between the die and the under-cladding layer down to 5 µm or so (The clearance between the die and the under-cladding layer is presumed by the thickness of the burr around the over-cladding layer). The clad-forming varnish was cured by the irradiation of ultraviolet rays from the polyethylene terephthalate film side.

The optical waveguide was completed by removing the die. The thickness of the burr around the over-cladding layer in the prepared optical waveguide was as indicated in Table 1.

### [Comparative Example]

As shown in FIGs. 4 (a) to 4 (d), a clad-forming varnish was injected from a through-hole by using a quartz molding die with a through-hole and then the clad-forming varnish was cured by the irradiation of ultraviolet rays through the quartz molding die.

An optical waveguide was formed of the same material and under the same conditions except for the above. The thickness of the burr around the over-cladding layer in the prepared optical waveguide was as indicated in Table 1.

**[Table 1]**

| | Method | Thickness of burr around an over-cladding layer (µm) |
|---|---|---|
| Examples | Manufacturing method of the present invention | 5 |
| Comparative Example | Conventional manufacturing method | 50 |

### [Measuring Method]

### [Thickness of burr]

The polyethylene terephthalate film and the over-cladding layer + under-cladding layer were separated each other by inflecting the prepared optical waveguide. The burr of the exposed over-cladding layer was measured by using a micro gage (MF-50, manufactured by Nikon Corporation).

### [Applications]

Although the applications of the optical waveguides obtained by the present invention are not particularly limited, the optical waveguides are preferably used for, for example, optical wiring plates, an optical connectors, substrates with optical-electric devices mixedly mounted, coordinate input devices of optical touch panels and the like.

## Claims

1. A method for manufacturing an optical waveguide (10) including a substrate (11) for transmitting ultraviolet rays (24); an under-cladding layer (12) formed on the substrate (11); a core (13) formed on the under-cladding layer (12) and an over-cladding layer (14) formed on the under-cladding layer (12) so as to cover the core (13), the method comprising the steps of:
A) filling an ultraviolet curable liquid-state resin (17) for forming an over-cladding layer (14) in a concave portion (16) of a die (15) with a concave portion;
B) bringing the core (13) and the under-cladding layer (12) into close contact with the ultraviolet curable liquid-state resin (17) filled in the concave portion (16) of the die (15); and
C) irradiating ultraviolet rays (24) from the substrate (11) side to cure the ultraviolet curable liquid-state resin (17) while bringing the under-cladding layer (12) into close contact with the die (15) by applying a pressure (23) onto the substrate (11) and the die (15), alternatively, after bringing the under-cladding layer (12) into close contact with the die (15) by applying a pressure (23) onto the substrate (11) and the die (15) and then removing the die (15).

2. The method according to claim 1, wherein the substrate (11) is one of a cycloolefin-resin film and an ester resin film.

3. The method according to claim 1 or claim 2, wherein a material for the die (15) is a metal.

4. The method according to claim 3, wherein the material for the die (15) is any one of an aluminum, an aluminum alloy, a nickel, a nickel alloy, an iron, and a ferrous alloy.

5. The method according to claim 1 or claim 2, wherein an end surface of the over-cladding layer (14) is a long lens (25) having a cross-sectional shape of a quarter of a circle.

6. The method according to claim 1 or claim 2, wherein the pressure (23) is 0.01 to 10 MPa.

7. The method according to claim 1 or claim 2, wherein a clearance between the under-cladding layer (12) and the die (15) is less than 5 µm when bringing the under-cladding layer (12) into close contact with the die (15).

8. The method according to claim 1 or claim 2, wherein a laminate (18) including a core (13), an under-cladding layer (12), and a substrate (11) is absorbed in a holder (22) with at least two absorption means (20,21) to release absorption of one absorption means (20) and the core (13) and the under-cladding layer (12) are partially in contact with the ultraviolet curable liquid-state resin (17) while bowing the laminate (18) and subsequently, the other absorption means (21) is released to bring the core (13) and the under-cladding layer (12) completely into contact with the ultraviolet curable liquid-state resin (17) in step B.
